# EUROPÄISCHE PATENTANMELDUNG

(11) **EP 1 672 010 A1**
(43) Veröffentlichungstag der Anmeldung: **21.06.2006**
(21) Anmeldenummer: 05026422.5
(22) Anmeldetag: 03.12.2005
(51) Int. Cl.: C08J 9/32, C09J 163/00, C08L 63/00

(54) **2 K Versteifungsmaterial für Aussenhautanwendungen**

(30) Priorität: 17.12.2004 DE 102004060783
(71) Anmelder: Henkel Kommanditgesellschaft auf Aktien, 40589 Düsseldorf (DE)
(72) Erfinder: Schubert, Daniel, 93051 Regensburg (DE); Wesch, Karl, 69429 Waldbrunn (DE); Lubczyk-Bleich, Frank, 30938 Grossburgwedel (DE); Leeb, Thomas, 71106 Magstadt (DE); Münz, Xaver, 69117 Heidelberg (DE); Stege, Michael, 38446 Wolfsburg (DE)

(57) **Zusammenfassung**

Zweikomponentige Klebstoffzusammensetzungen mit einer Komponente A enthaltend mindestens ein bei Raumtemperatur flüssiges Epoxidharz mit mindestens zwei Epoxidgruppen pro Molekül, mindestens einem Reaktivverdünner sowie Füllstoffen und/oder Leichffüllstoffen sowie Treibmitteln und einer Härterkomponente B enthaltend ein Polyaminoamid und ein Polyaminaddukt auf der Basis von Triethylentetramin eignen sich als zweikomponentiges Versteifungsmaterial für Hohlräume mit dünnen Außenwandungen. Sie weisen gute versteifende Wirkung auf, ohne dass es bei dünnwandigen Blechkonstruktionen zu visuellen Beeinträchtigungen der Außenseite durch Einzüge und / oder Beulen kommt.

## Beschreibung

Die Erfindung betrifft zweikomponentige Klebstoffzusammensetzungen zur Herstellung geschäumter Versteifungsmittel sowie ein Verfahren zum Versteifen und/oder Verstärken von Karosseriebauteilen in der Fahrzeugindustrie.

Metallische Leichtbauteile für eine konstant maßhaltige Serienfertigung mit vorgegebener Steifigkeit und Strukturfestigkeit werden immer häufiger benötigt. Insbesondere im Fahrzeugbau ist im Zuge der gewünschten Gewichtsersparnis Bedarf für metallische Leichtbauteile aus dünnwandigen Blechen, die trotzdem ausreichende Steifigkeit und Strukturfestigkeit besitzen.

Für solche Versteifungsaufgaben werden häufig einkomponentige, hitzehärtende Systeme eingesetzt wie sie beispielsweise in der WO 00/52086 sowie in dem dort auf den Seiten 1 bis 4 zitierten Stand der Technik beschrieben sind.

Derartige einkomponentige, hitzehärtende Systeme benötigen die Prozesswärme der diversen Trocknungsöfen im Zuge der Kraftfahrzeugfertigung um unter Aufschäumen auszuhärten. Für einige Anwendungen im Fahrzeugbau sowie insbesondere im Reparaturfall oder für den LKW- bzw. Busbau und anderen Sonderfahrzeugbau-Verfahren stehen derartige Prozesswärmen mit ausreichend hohen Temperaturen nicht zur Verfügung. Für solche Anwendungsfälle eignen sich zweikomponentige Bindemittelzusammensetzungen, deren beide Komponenten unmittelbar vor der Applikation gemischt werden und die dann unter Aufschäumen aushärten.
Aus der US 4,995,545 bzw. US 4,923,902 A sind zweikomponentige Versteifungsmaterialien auf Basis von Polyepoxiden und Polyaminen bekannt, deren beide Komponenten teigartige Konsistenz aufweisen und die nach dem Mischen in einer exothermen Reaktion unter Aufschäumen aushärten.

US 6,451,876 B1 beschreibt ein zweikomponentiges Bindemittelsystem zur Herstellung von versteifenden Strukturklebstoffen. Danach soll die eine Komponente ein oder mehrere Epoxydharze enthalten, insbesondere mindestens ein Epoxidharz, das ein Glycidylether eines Polyphenols ist sowie mindestens einen Reaktivverdünner und mindestens einen Kautschuk in Form von flüssigen Nitrilkautschuk sowie Glashohlkugeln, mindestens ein Thixotropiermittel und mindestens ein thermisch aktivierbares Treibmittel wie z.B. expandierbare Mikrohohlkugeln. Die B-Komponente ist danach ein Härtungssystem enthaltend mindestens ein aliphatisches Polyamin, mindestens ein Amidoamin, mindestens einen Alkohol und mindestens ein Addukt aus einem Polyamin und einem Epoxid. Anorganische Hohlkugeln sollen in einer oder in beiden Komponenten vorhanden sein. In einer bevorzugten Ausführungsform soll mindestens ein Kautschuk und mindestens ein Thixotropiermittel in der Härterkomponente B vorhanden sein.

In ähnlicher Weise beschreibt US 6,787,579 B2 eine zweikomponentige Zusammensetzung auf der Basis von Epoxiden und Aminen zur Verwendung als vor Ort aufschäumbare Materialien mit hoher Kompressionsfestigkeit, hohem Kompressionsmodul, hoher Glasübergangstemperatur und hoher Dehnbarkeit. Als A-Komponente oder Harzkomponente werden Epoxidharze vorgeschlagen, vorzugsweise Mischungen aus flüssigen, semifesten und festen Epoxidharzen. Als B-Komponente eignet sich nach dieser Schrift jedes Härtungsagens, mit dem nach Aushärtung Elastizitätsmodul oder Glasübergangstemperatur des Materials erreicht wird, die gleich dem Standes der Technik ist, wobei jedoch nach der Aushärtung eine signifikante plastische Deformation möglich sein soll. Vorzugsweise wird vorgeschlagen, cycloaliphatische Amine als Härtungsagens zu nehmen, die eine lange Aushärtungszeit bewirken.

Der bisher bekannt gewordene Stand der Technik zu zweikomponentigen, vor Ort aufschäumbare Versteifungsmitteln löst jedoch beim Versteifen von dünnwandigen Hohlstrukturen wie Automobiltürteilen, Dachteilen, Kofferraumdeckeln oder dergleichen das Problem des Verziehens der dünnwandigen Blechteile durch den Schrumpf des geschäumten Versteifungsmittels während des Aushärtens nur ungenügend, so dass beim Aushärten Spannungen in den zu versteifenden Hohlraumwänden auftreten. Diese durch die Spannungen verursachten marginalen Verwerfungen und Unebenheiten führen bei hochglänzend lackierten Bauteilen zu optisch störenden Abzeichnungen (auch "Read through Effekt" genannt). Ein derartiger "Read through Effekt" entsteht auch bei starker Erwärmung des Versteifungsmittels durch eine exotherme Härtungsreaktion. Ebenso kann durch die Wärmedehnung des Außenbleches während des Härtungsprozesses diese Dehnung als "Beule" eingefroren werden.

Die Erfinder der vorliegenden Anmeldung haben sich daher die Aufgabe gestellt, angesichts des vorstehend genannten Standes der Technik zweikomponentige Klebstoffzusammensetzungen zur Herstellung geschäumter Versteifungsmittel bereitzustellen, die sich im Fahrzeugbau auch zum Versteifen von Hohlräumen aus dünnwandigen metallischen Substraten eignen, ohne dass es bei deren Aushärtungs- und Expansions-Reaktionen zu Spannungen in dem zu versteifenden Substrat kommt, so dass die Abzeichnungseffekte des Versteifungskörpers vermieden werden.

Die erfindungsgemäße Lösung der Aufgabe ist den Patentansprüche zu entnehmen. Sie besteht im Wesentlichen in der Bereitstellung einer zweikomponentigen Klebstoffzusammensetzung zur Herstellung geschäumter Versteifungsmittel, deren Komponenten A und B aus
A) einer Epoxy-Komponente und
B) einer Härterkomponente mit aminischen Härtern
sowie Treibmitteln, ggf. in beiden Komponenten, bestehen.

Ein weiterer Gegenstand der vorliegenden Erfindung ist ein Verfahren zum abzeichnungsfreien Versteifen von dünnwandigen metallischen Hohlkörpern.

Die Komponente A enthält dabei mindestens ein bei Raumtemperatur flüssiges Epoxidharz mit mindestens zwei Epoxygruppen pro Molekül, mindestens eine Epoxyverbindung mit einer Epoxidgruppe pro Molekül (Reaktivverdünner), Füllstoffe und/oder Leichtfüllstoffe sowie Treibmittel.

Die Härterkomponente B) enthält mindestens ein aliphatisches Polyaminoamin, mindestens ein Polyaminaddukt auf der Basis von Triethylentetramin, Füllstoffe und/oder Leichtfüllstoffe sowie Treibmittel, wobei das Verhältnis von Polyaminoamin zu Polyaminaddukt auf der Basis von Triethylentetramin 1,5:1 bis 3:1 ist.

Das erfindungsgemäße Verfahren zum abzeichnungsfreien Versteifen von dünnwandigen metallischen Hohlkörpern beinhaltet die folgenden wesentlichen Verfahrensschritte:
a) Mischen der Epoxydharz-haltigen Komponente A und der Härter Komponente B der Klebstoffzusammensetzung im Volumenverhältnis 1,5:1 bis 3:1, vorzugsweise 2:1,
b) Einbringen des homogenen Gemisches aus Komponente A und Komponente B in den zu versteifenden Hohlraum, wobei
c) das Gemisch unter Aufschäumen den Hohlraum ausfüllt und aushärtet. Dabei benetzt es die Innenseiten der Hohlraumwandungen und verbindet sich klebend mit der Innenwand unter Ausbildung eines kraftschlüssigen Verbundes der Außenhaut mit dem Verstärkungsteil, ohne dass es auf der Außenseite zu Abzeichnungen kommt.

Als Epoxidharze für die Komponente A eignen sich eine Vielzahl von Polyepoxiden, die mindestens 2 1,2-Epoxigruppen pro Molekül haben. Das Epoxid-Äquivalent dieser Polyepoxide kann zwischen 150 und 50000, vorzugsweise zwischen 170 und 5000, variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schließen die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxy-phenyl)-2,2-propan), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin. Weitere geeignete Polyphenole als Basis für die Polyglycidylether sind die bekannten Kondensationsprodukte aus Phenol und Formaldehyd oder Acetaldehyd vom Typ der Novolakharze.

Weitere Polyepoxide sind Polyglycidylester von Polycarbonsäuren, beispielsweise Umsetzungsprodukte von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Weitere Epoxide leiten sich von den Epoxidierungsprodukten olefinisch ungesättigter cycloaliphatischer Verbindungen oder von nativen Ölen und Fetten ab.

Ganz besonders bevorzugt werden die Epoxidharze, die sich durch Reaktion von Bisphenol A oder Bisphenol F und Epichlorhydrin ableiten, wobei die flüssigen Epoxidharze vorzugsweise auf der Basis des Bisphenols A sind und ein hinreichend niedriges Molekulargewicht aufweisen. Die bei Raumtemperatur flüssigen Epoxidharze haben in der Regel ein Epoxid-Äquivalentgewicht von 150 bis etwa 480, besonders bevorzugt ist ein Epoxid-Äquivalentgewichtbereich von 182 bis 350.

Vorzugsweise werden als Epoxyverbindungen mit mindestens zwei Epoxidgruppen pro Molekül die vorgenannten flüssigen Epoxidharze eingesetzt.

Ein weiterer wesentlicher Bestandteil der Komponente A der erfindungsgemäßen Bindemittel-Zusammensetzung sind Reaktivverdünner. Reaktive Verdünner im Sinne dieser Erfindung sind Epoxigruppen enthaltende, niederviskose Substanzen (Glycidylether oder Glycidylester) mit aliphatischer oder aromatischer Struktur, die vorzugsweise nur eine Epoxidgruppe pro Molekül aufweisen. Diese Reaktivverdünner dienen einerseits zur Viskositätserniedrigung des Bindemittel-Systems oberhalb des Erweichungspunktes, andererseits steuern sie den Temperaturverlauf während des Aushärtungs- und Aufschäumreaktion des Versteifungsmittels. Typische Beispiele für erfindungsgemäß einzusetzende Reaktivverdünner sind Mono-glycidylether von C6- bis C14- Monoalkoholen oder Alkylphenolen sowie die Monoglycidylether des Cashewnuß-Schalenöls, oder ggf.

Diglycidylether des Ethylenglycols, Diethylenglycols, Triethylenglycols, Tetraethylenglykols, Propylenglycols, Dipropylenglycols, Tripropylenglycols, Tetrapropylenglycols, 1,4-Butylenglycols, 1,5-Pentandiols, 1,6-Hexandiols, Cyclohexandimethanols, Triglycidylether des Trimethylolpropans sowie die Glycidylester von C6- bis C24- Carbonsäuren oder deren Mischungen.

Die Menge an einzusetzenden reaktiven Verdünner im Verhältnis zum Epoxidharz oder Epoxydharzgemisch aus Epoxiden mit mindestens zwei Epoxygruppen pro Molekül beeinflusst im starken Masse die Exothermie der Reaktion der Epoxyverbindungen mit den aminischen Härterkomponenten. Außerdem lassen sich durch den Anteil der niedrigviskosen Reaktivverdünner die Fließeigenschaften der Komponente A, insbesondere im Bezug auf ihre Viskosität, steuern. Vorzugsweise beträgt das Verhältnis der Epoxidharze mindestens zwei Epoxygruppen pro Molekül zu den Reaktivverdünner zwischen 8:2 und 9,5:0,5 (Gewichtsverhältnis).

Weitere wichtigere Bestandteile der Komponente A sind Füllstoffe und/oder insbesondere Leichtfüllstoffe sowie Treibmittel, Rheologiehilfsmittel und gegebenenfalls Farbpigmente wie sonstige an sich bekannte Hilfs- und Zusatzmittel eingesetzt werden.

Als Füllstoffe können zum Beispiel die diversen gemahlenen oder gefällten Kreiden, Calcium-Magnesiumcarbonate, Schwerspat sowie insbesondere silikatische Füllstoffe vom Typ des Aluminium-Magnesium-Silicats oder Aluminium-Magnesium-Calcium-Silicats, z. B. Wollastonit, Chlorit eingesetzt werden.

Erfindungsgemäßes Ziel ist es, die zweikomponentigen expandierbaren Klebstoffzusammensetzungen zur Herstellung von spezifisch leichten Strukturen einzusetzen. Daher enthalten sie zusätzlich zu den vorgenannten "normalen" Füllstoffen sog. Leichtfüllstoffe, die ausgewählt werden aus der Gruppe der Glashohlkugeln, Flugasche (Fillite), Kunststoffhohlkugeln auf der Basis von Phenolharzen, Epoxidharzen oder Polyestern, keramischen Hohlkugeln oder organischen Leichtfüllstoffen natürlichen Ursprungs wie gemahlene Nußschalen, beispielsweise die Schalen von Cashewnüssen, Kokosnüssen oder Erdnußschalen sowie Korkmehl oder Kokspulver. Besonders bevorzugt werden dabei solche Leichtfüllstoffe auf der Basis von Mikrohohlkugeln, die in der ausgehärteten Formkörpermatrix eine hohe Druckfestigkeit des Formkörpers gewährleisten. Geeignete Glashohlkugeln sind zum Beispiel unter dem Namen "Scotchlite" von der Fa. Minnesota Mining & Manufacturing mit den Typen B38, C15, K20 oder VS5500 im Handel. Die Glashohlkugeln haben vorzugsweise Durchmesser zwischen etwa 5 und 200 µm.

Als Treibmittel eignen sich zwar im Prinzip alle bekannten Treibmittel wie z. B. Azoverbindungen, Hydrazide und dgl., besonders bevorzugt werden jedoch die expandierbaren bzw. expandierten Kunststoffmikrohohlkugeln auf der Basis von Polyvinylidenchloridcopolymeren, diese sind unter den Namen Dualite bzw. Expancel von den Firmen Pierce & Stevens bzw. Casco Nobel im Handel erhältlich.

Weiterhin kann die erfindungsgemäße Klebstoffkomponente A gängige weitere Hilfs- und Zusatzmittel wie z. B. Weichmacher, Reaktivverdünner, RheologieHilfsmittel, wie z.B. pyrogene Kieselsäuren, Netzmittel, Haftvermittler, Alterungsschutzmittel, Stabilisatoren und/oder Farbpigmente, wie z.B. Ruß, enthalten.

Die Härterkomponente B enthält mindestens ein aliphatisches Polyaminoamin, mindestens ein Polyaminaddukt auf der Basis von Trietylentetramin sowie ebenfalls die obengenannten Füllstoffe und/oder Leichtfüllstoffe sowie Treibmittel.

Polyaminoamide haben die allgemeine Struktur 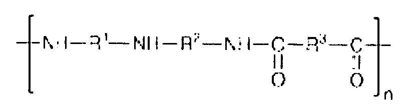 ihre Hauptketten enthalten sowohl Amin- als auch Amid-Funktionalitäten. Sie werden in bekannter Weise durch Kondensation von dimeren oder polymeren Fettsäuren mit niedermolekularen Alkylendi- oder Polyaminen oder cycloaliphatischen Diaminen hergestellt. Weiterhin können sogenannte Mannich-Basen als Härterkomponente eingesetzt werden. Die für die erfindungsgemäß für die Komponente B geeigneten Mannich-Basen sind dabei Kondensationsprodukte aus Di- oder Polyaminen mit Acrylsäureestern mit anschließender Polykondensation der resultierenden Aminosäureester. Besonders bevorzugt sind dabei Polyaminoamide auf der Basis von Fettsäuren bzw. polymerisierten Fettsäuren wie Tallölfettsäuren und aliphatischen Polyaminen wie Triethylentetramin oder Tetraethylenpentamin. Typischerweise haben diese Polyaminoamide Aminzahlen zwischen 400 und 500 (nach DIN 16945 bzw. ASTM D 2073).

Als weitere Aminkomponente enthält gemäß Härterkomponente B ein Polyaminaddukt auf der Basis von Triethylentetramin, insbesondere Kondensationsprodukte von Triethylentetramin im Überschuß mit niedermolekularen Epoxyverbindungen. Letztere können die Glycidylether des Bisphenols A sein, es können aber auch vorzugsweise Glycidylester von Fettsäuren, insbesondere C₁₂ bis C₁₄ Fettsäuren sein. Diese Härterkomponenten zeichnen sich durch sehr niedrige Viskosität und hoher Reaktivität bei Raumtemperatur aus. Ihre Aminzahlen liegen zwischen 800 und 1000.

Die Härterkomponente B enthält neben den vorgenannten beiden Aminkomponenten außerdem noch Füllstoffe und/oder insbesondere Leichtfüllstoffe sowie ebenfalls Treibmittel der vorstehend für die Komponente A genannten Art. Durch die Wahl des Verhältnisses der beiden unterschiedlichen Aminoverbindungen in der Komponente B sowie der Variation des Reaktivverdünners im Verhältnis zum Polyepoxydharz lässt sich die exotherme Reaktion beim Vermischen der Komponente A mit der Komponente B so steuern, dass das Material unter den vorgegebenen Prozessparametern vollständig aushärtet und den zu versteifenden Hohlraum unter Aufschäumen vollständig ausfüllt und aushärtet, gleichzeitig aber eine Abzeichnung an der Außenhaut vermieden wird.

Das Verhältnis von Polyaminoamid zu niedrigviskosen Polyaminaddukt beträgt dabei in der Komponente B etwa 1,5:1 bis 3:1 (Gewichtsverhältnis).

Die reaktiven Bestandteile der Komponenten A und B werden dabei so ausgewählt, dass für die Endanwendung einfache Mischungsverhältnisse resultieren, insbesondere werden sie so gewählt, dass die Komponente A im Verhältnis zur Komponente B im Volumenverhältnis 1,5:1 bis 3:1, vorzugsweise 2:1 gemischt werden muß, dabei entspricht das ganz besonderes bevorzugte Volumenverhältnis 2 Volumenteile A zu einem Volumenteil B einem Gewichtsverhältnis von etwa 3:1.

Vorteilhafterweise können sowohl in der Komponente A als auch in der Komponente B Kautschuke, insbesondere Flüssigkautschuke mitverwendet werden. Beispielhaft genannte seien hier Styrol-Butadienkautschuk (SBR), Nitril-Butadienkautschuk, Butylkautschuk, Polyisopren, Polybutadien, Isobutylenpolymere, Poly-α-Olefine, Ethylen-Propylenelastomere. Ganz besonderes sind bevorzugt dabei Flüssigkautschuke vom Typ der Butadien-Acrylnitril-Copolymeren mit Brookfield Viskositäten zwischen 10000 und 40000 mPa.s bei 50°C. Diese Flüssigkautschuke enthalten typischerweise zwischen 20 und 40 Gew.-% Acrylnitril. Besonders bevorzugt enthält dabei die Härterkomponente den Flüssigkautschuk.

In der Regel enthalten sowohl die Komponente A als auch die Komponente B pyrogene Kieselsäuren, es kann hierbei zweckmäßig sein, in der epoxydharzhaltigen Komponente A hydrophobe pyrogene Kieselsäuren einzusetzen und in der Härterkomponente B hydrophile pyrogene Kieselsäuren zu verwenden.

Anhand der nachfolgenden Beispiele soll die Erfindung näher erläutert werden.

### Beispiele

Zur Ermittlung des Abzeichnungsverhaltens wurde ein auszuschäumender Hohlkörper aus einer aufgeschnittenen Weißblechdose und einem darunter befindlichen dünnwandigen Stahlblech, wie es in der Automobilindustrie eingesetzt wird gebildet. Ein Stahlblech der Abmessungen 150 x 300 x 0,8 mm wurde entfettet und schwarz lackiert und nach dem Trockenen mit Klarlack lackiert. Der Boden einer 200 ml fassenden Weißblechdose wurde herausgetrennt und die so präparierte Dose auf die unlackierte Seite des Stahlblechs in der Mitte gestellt und mit etwa 150 ml der zu beurteilenden zweikomponentigen Klebstoffzusammensetzung gefüllt. Nach dem vollständigen Aushärten und Aufschäumen, etwa 8 Stunden, wurde das Blech auf der lackierten Seite auf Abzeichnungen überprüft. Dabei wurde die folgende Bewertung vorgenommen: 1 = sehr gut; 2 = mangelbehaftet; 3 = schlecht. Dabei war ein gutes Einzugsverhalten ein solches, bei dem auf der lackierten Seite des Bleches die Oberfläche völlig eben und ohne optisch bemerkbare Einzüge und / oder Beulen war.

Die in nachfolgender Tabelle aufgeführten Komponenten A bzw. Komponenten B wurden in einem evakuierbaren Laborkneter durch Mischen zur Homogenität hergestellt und anschließend in Kartuschensets für ein Volumenverhältnis 2:1 (A:B) abgefüllt. Zur Prüfung wurden die beiden Kartuschen mit einem Statikmischer versehen und die Komponenten A und B gleichzeitig mit Hilfe einer Kartuschenpistole durch den Statikmischer ausgepresst.

Die Versuchsergebnisse sind in der nachfolgenden Tabelle aufgeführt.

| | Vergleich: Komponente A | Erfindungsgemäß Komponente A |
|---|---|---|
| Epoxidharz auf Basis Epichlorhydrin Bisphenol-A¹⁾ | 590,0 | 590,0 |
| C12-14 Alkylglycidylether²⁾ | 60,0 | 65,0 |
| Russpaste | 3,0 | 3,0 |
| Calciumoxid | 10,0 | 10,0 |
| Scotchlite Glass Bubbles VS 5500 | 180,0 | 205,0 |
| PVDC Microspheres Expancel 820 DU | 19,0 | |
| PVDC Microspheres Expancel 551 DU 40 | | 19,0 |
| Kieselsäure, pyrogen,Cab O Sil TS 720 | 40,0 | 35,0 |
| Calciumcarbonat | 98,0 | 73,0 |
| Summe Komponente A | 1000 | 1000 |

| | Vergleich: Komponente B | Erfindungsgemäß Komponente B |
|---|---|---|
| Aminaddukt, aliphatisch³⁾ | 332,0 | 220,0 |
| Amidoamin, aliphatisch⁴⁾ | 332,0 | 511,2 |
| Butadien Acrylnitril Copolymer | 65,5 | 65,5 |
| modifiziertes AluminiumMagnesiumSilicat | 11,5 | 15,0 |
| Calciumcarbonat | 35,4 | |
| Kieselsäure pyrogen, hydrophil | 11,4 | 23,3 |
| Scotchlite Glass Bubbles K 20 | 212,2 | 160,0 |
| PVDC Microspheres Expancel 551 DU 40 | | 5,0 |
| Summe Komponente B | 1000 | 1000 |
| Mischungsverhältnis A:B [Volumenteile] | 2:1 | 2:1 |
| Maximaltemperatur beim Aushärten [°C] | ca. 170 | ca. 120 |
| Druckfestigkeit [N/mm²] | 46 | 63 |
| Dichte [g/cm³] | 0,85 | 0,8 |
| Einzugverhalten | 3 | 1 |

Die erfindungsgemäßen zweikomponentigen Klebstoffzusammensetzungen härten unter einer geringeren exothermen Reaktion (niedrigeren Maximaltemperatur) aus, sie zeigen gegenüber den Zusammensetzungen des Standes der Technik höhere Druckfestigkeiten, niedrigere Dichten und ein besseres Einzugsverhalten.

## Patentansprüche

1. Zweikomponentige Klebstoffzusammensetzung zur Herstellung geschäumter Versteifungsmittel bestehend aus
A) einer Epoxy-Komponente enthaltend mindestens ein bei Raumtemperatur flüssiges Epoxidharz mit mindestens 2 Epoxygruppen pro Molekül, mindestens einem Reaktivverdünner, Füllstoffe und/oder Leichtfüllstoffe sowie Treibmittel und gegebenenfalls Pigmente.
B) einer Härterkomponente enthaltend mindestens ein aliphatisches Polyaminoamid, mindestens ein Polyaminoaddukt auf der Basis von Triethylentetramin, Füllstoffe und/oder Leichtfüllstoffe sowie Treibmittel wobei das Verhältnis von Polyaminoamid zu Polyaminoaddukt 1,5:1 bis 3:1 ist.

2. Zweikomponentige Klebstoffzusammensetzung nach Anspruch 1, **dadurch gekennzeichnet**, das das Verhältnis des/der Epoxidharze(s) mit mindestens 2 Epoxygruppen pro Molekül zu den Reaktivverdünner zwischen 8:2 und 9.5:0,5 (Gewichtsverhältnis) liegt.

3. Zweikomponentige Klebstoffzusammensetzung nach Anspruch 1 oder 2, **dadurch gekennzeichnet, dass** sowohl die Komponente A als auch die Komponente B hydrophile, pyrogene Kieselsäure enthalten.

4. Zweikomponentige Klebstoffzusammensetzung nach mindestens einem der vorhergehenden Ansprüche, **dadurch gekennzeichnet, dass** als Treibmittel nicht expandierte, expandierbare Mikrohohlkugeln verwendet werden.

5. Zweikomponentige Klebstoffzusammensetzung nach mindestens einem der vorhergehenden Ansprüche **dadurch gekennzeichnet, dass** Glashohlkugeln als Leichtfüllstoffe verwendet werden.

6. Zweikomponentige Klebstoffzusammensetzungen nach mindestens einem der vorhergehenden Ansprüche **dadurch gekennzeichnet, dass** die Komponente B mindestens ein bei Raumtemperatur flüssiges Butadien-Copolymer enthält.

7. Verfahren zum abzeichnungsfreien Versteifen von dünnwandigen metallischen Hohlkörper **dadurch gekennzeichnet, dass** die Komponente A und B der Klebstoffzusammensetzungen nach mindestens einem der Ansprüche 1 bis 6 im Volumenverhältnis 1,5:1 bis 3:1, vorzugsweise 2:1 gemischt werden und dieses Gemisch in den zu versteifenden Hohlraum einbringt, wobei das Gemisch unter Aufschäumen den Hohlraum ausfüllt und aushärtet.

8. Verfahren nach Anspruch 7, **dadurch gekennzeichnet, dass** zumindest eine Wandung des Hohlkörpers die Außenwand oder einem Teil der Außenwand eines Kraftfahrzeuges bildet.
